# EUROPEAN PATENT APPLICATION

(11) **EP 4 685 988 A1**
(43) Date of publication of application: **28.01.2026**
(21) Application number: 24883784.1
(22) Date of filing: 02.04.2024
(51) Int. Cl.: H01M 50/536, H01M 50/534, H01M 50/533, H01M 10/058

(54) **BATTERY CELL, BATTERY AND ELECTRICAL APPARATUS**

(30) Priority: 01.11.2023 CN 202311437733
(71) Applicant: Contemporary Amperex Technology Co., Limited, Ningde, Fujian 352100 (CN)
(72) Inventor: WU, Kai, Ningde, Fujian 352100 (CN); GU, Hui, Ningde, Fujian 352100 (CN); LIU, Chao, Ningde, Fujian 352100 (CN)
(74) Representative: Ziebig Hengelhaupt Intellectual Property Attorneys Patentanwaltskanzlei PartGmbB
(86) International application number: PCT/CN2024/085511
(87) International publication number: WO 2025/091769

(57) **Abstract**

The present application provides a battery cell, a battery, and an electrical apparatus, which belongs to the field of battery technologies. The battery cell comprises an electrode assembly, a case, and a current collector end cover. The electrode assembly comprises a first tab. The case is formed with an accommodating cavity for accommodating the electrode assembly and an opening at one end of the accommodating cavity. The current collector end cover is connected to the case to close the opening. The current collector end cover comprises a tab connecting portion and a case connecting portion connected to each other. The tab connecting portion is connected to the first tab, and the case connecting portion is connected to the case.

## Description

### CROSS-REFERENCE

The present application is based on Chinese patent application No. 202311437733.7 filed on Nov. 1, 2023 and entitled "BATTERY CELL, BATTERY, AND ELECTRICAL APPARATUS", which is incorporated into the present application by reference in its entirety.

### TECHNICAL FIELD

The present application relates to the technical field of batteries, and in particular to a battery cell, a battery, and an electrical apparatus.

### BACKGROUND

With energy saving and emission reduction being the key to the sustainable development of the automobile industry, electric vehicles have become an important part of the sustainable development of automotive industry due to their advantages of energy saving and environmental protection. For electric vehicles, battery technology is an important factor in development.

In the existing battery structure, the tab of the battery cell is usually welded to the current collector plate first, then the current collector plate is welded to the end cover, and finally the end cover is welded to the case. This not only involves more welding steps, but also the welding between the current collector plate and the end cover is prone to false welding, which in turn affects the performance and reliability of the battery cell.

### SUMMARY

The present application aims to at least solve one of the technical problems in the background section. To this end, an objective of the present application is to propose a battery cell, a battery, and an electrical apparatus to improve the reliability of the battery cell.

An embodiment of a first aspect of the present application provides a battery cell, the battery cell including an electrode assembly, a case, and a current collector end cover. The electrode assembly includes a first tab; a case formed with an accommodating cavity for accommodating the electrode assembly and an opening at one end of the accommodating cavity; a current collector end cover connected to the case to close the opening, the current collector end cover including a tab connecting portion and a case connecting portion connected to each other, wherein the tab connecting portion is connected to the first tab, and the case connecting portion is connected to the case.

In the technical solution of the embodiments of the present application, a reliable connection between the tab connecting portion and the case connecting portion can be achieved before the tab connecting portion is connected to the first tab. This not only reduces the number of components during battery assembly and simplifies the welding process, but also reduces the risk of false welding and improves the reliability of the battery cell.

In some embodiments, the tab connecting portion is welded to the first tab to form a welding area, and a projection of the welding area on the current collector end cover is offset from the case connecting portion. The projection of the welding area formed by welding the tab connecting portion to the first tab on the current collector end cover is offset from the case connecting portion, which is more conducive to the connection of the current collector end cover to the first tab and the case respectively, simplifies the manufacturing process of the battery cell, and can reduce the weight of the current collector end cover, which is beneficial to improving the energy density of the battery cell.

In some embodiments, the fracture elongation of the case connecting portion is smaller than the fracture elongation of the tab connecting portion. By setting the fracture elongation of the tab connecting portion to be smaller than the fracture elongation of the case connecting portion, the different connection requirements of the tab connecting portion and the case connecting portion as well as the overall structural strength requirements of the current collector end cover can be better taken into account. Also, the tab connecting portion will rupture first to facilitate pressure relief when the internal pressure of the battery cell is high, thereby improving the reliability of the battery cell.

In some embodiments, a ratio S of the fracture elongation of the case connecting portion to the fracture elongation of the tab connecting portion satisfies 1.1 ≤ S ≤ 2.2. By setting the ratio S of the fracture elongation of the case connecting portion to the fracture elongation of the tab connecting portion to satisfy 1.1 ≤ S ≤ 2.2, the stability of the performance and the service life of the current collector end cover can be taken into account while meeting the structural strength and connection requirements of the current collector end cover.

In some embodiments, the fracture elongation S1 of the tab connecting portion satisfies 0.2 ≤ S1≤ 0.3, and the fracture elongation S2 of the case connecting portion satisfies 0.35 ≤ S2 ≤ 0.45. Reasonable selection of the fracture elongation of the tab connecting portion and the fracture elongation of the case connecting portion can enable the performance of the current collector end cover to take into account both the connection requirements and the structural strength requirements.

In some embodiments, the tab connecting portion includes a first main body and a first connecting portion connected to the first main body and arranged along the outer edge of the first main body; the case connecting portion includes a second connecting portion and a first through hole, an orthographic projection of the first main body on the case connecting portion is located within the first through hole, and the first connecting portion is welded to the second connecting portion. By setting a first through hole on the case connecting portion, the orthographic projection of the first main body included in the tab connecting portion on the case connecting portion is located within the first through hole, and the first connecting portion is welded to the second connecting portion, which can better achieve the integrated molding of the current collector end cover , thereby reducing the risk of false welding between the current collector plate and the end cover caused by the use of penetration welding, simplifying the manufacturing process and reducing manufacturing costs.

In some embodiments, the first connecting portion includes a first protrusion extending in a direction away from or towards the electrode assembly, and along the first direction, the first protrusion abuts against the second connecting portion, and the first direction is the direction from a center of the current collector end cover to an edge of the current collector end cover. By providing a first protrusion on the first connecting portion for connecting with the case connecting portion, a simpler and more reliable connection between the tab connecting portion and the case connecting portion can be achieved.

In some embodiments, the second connecting portion includes a second protrusion extending in a direction away from or towards the electrode assembly, along a first direction, the second protrusion abuts against the first connecting portion, and the first direction is a direction from a center of the current collector end cover to an edge of the current collector end cover. By providing a second protrusion on the second connecting portion, the connection between the tab connecting portion and the case connecting portion is made simpler and more reliable.

In some embodiments, the first connecting portion includes a first protrusion extending in a direction away from the electrode assembly, and the second connecting portion includes a second protrusion extending in a direction towards the electrode assembly, and along the first direction, the first protrusion abuts against the second protrusion, and the first direction is the direction from the center of the current collector end cover to the edge of the current collector end cover; or, the first connecting portion includes a second protrusion extending in a direction towards the electrode assembly, and along the first direction, the first protrusion abuts against the second protrusion, and the first direction is the direction from the center of the current collector end cover to the edge of the current collector end cover. By providing a first protrusion on the first connecting portion and a second protrusion on the second connecting portion, the positioning between the first protrusion and the second protrusion can reduce the accuracy requirements for operators when assembling the current collector end cover, and also facilitate the welding process between the tab connecting portion and the case connecting portion, thereby achieving a more reliable connection.

In some embodiments, the tab connecting portion is in the shape of a plate, and an orthographic projection of the first connecting portion on the case connecting portion at least partially overlaps with the second connecting portion. By setting the tab connecting portion as a flat plate and making the orthographic projection of the first connecting portion on the case connecting portion overlap at least partially with the second connecting portion, the size of the current collector end cover along the thickness direction can be reduced while considering the connection positioning of the tab connecting portion and the case connecting portion, which is beneficial for improving the energy density of the battery.

In some embodiments, a side of the tab connecting portion facing the electrode assembly is flush with a side of the case connecting portion facing the electrode assembly. By aligning the surface of the electrode assembly facing the side of the tab connecting portion with the surface of the electrode assembly facing the side of the case connecting portion, it is possible to reduce the height of the current collector end cover while maintaining its strength, thereby increasing the capacity of the accommodating cavity of the case and reducing the height of the battery cell.

In some embodiments, a base metal of the tab connecting portion is different from a base metal of the case connecting portion. By setting the base metal of the tab connecting portion and the case connecting portion to be different, it is possible to better balance the different connection requirements of the tab connecting portion and the case connecting portion, as well as the overall strength requirements of the current collector end cover, thereby improving the performance and reliability of the battery cell.

In some embodiments, the base metal of the tab connecting portion is copper; the base metal of the case connecting portion is iron or aluminum. By using copper as the base metal of the tab connecting portion and iron or aluminum as the base metal of the case connecting portion, the current carrying capacity and structural strength of the current collector end cover can be improved, and the reliability of the battery cell can be enhanced.

In some embodiments, the base metal of the tab connecting portion is the same as the base metal of the case connecting portion. By setting the base metal of the tab connecting portion and the case connecting portion to be the same, it can simplify the preparation of the current collector end cover and reduce the risk of unreliable connection between the tab connecting portion and the case connecting portion.

In some embodiments, the base metal of the tab connecting portion and the case connecting portion is copper. By selecting copper as the base metal for the tab connecting portion and the case connecting portion, it can improve the current carrying capability and corrosion resistance of the current collector end cover, and enhance the reliability of the battery cell.

In some embodiments, the maximum thickness of the tab connecting portion is d₁, the minimum thickness of the case connecting portion is d₂, and d₁ ≤ d₂ is satisfied. The thicker the component, the greater the bending strength of the component. The maximum thickness d₁ of the tab connecting portion should be less than or equal to the minimum thickness d₂ of the case connecting portion. In fact, increasing the thickness of the case connecting portion is equivalent to enhancing the overall strength and deformation resistance of the current collector end cover. Also, a smaller thickness of the tab connecting portion is beneficial for reducing internal resistance and the weight of the current collector end cover, and improving the performance of the battery cell.

In some embodiments, the maximum thickness of the tab connecting portion is d₁, the minimum thickness of the case connecting portion is d₂, and 0.5 ≤ d₁/d₂ ≤ 1 is satisfied. By controlling the ratio of the thickness d₁ of the tab connecting portion to the thickness d₂ of the case connecting portion within an appropriate range, it is possible to balance the structural strength of the current collector end cover and the energy density of the battery cell, thereby improving the performance of the battery cell.

In some embodiments, a ratio a of a projection area of the tab connecting portion on the first plane to a projection area of the current collector end cover on the first plane satisfies: 0.1 ≤ a ≤ 0.95, wherein the first plane is a plane perpendicular to the thickness direction of the current collector end cover. Limiting the ratio a of the projection area of the tab connecting portion on the first plane to the projection area of the current collector end cover on the first plane within an appropriate range can better balance the connection reliability and current carrying capacity of the current collector end cover and the first tab, as well as the overall structural strength, and improve the reliability of the current collector end cover.

In some embodiments, a ratio a of a projection area of the tab connecting portion on the first plane to a projection area of the current collector end cover on the first plane satisfies: 0.4 ≤ a ≤ 0.6. By setting the ratio a of the area of the tab connecting portion to the current collector end cover to be between 0.4 and 0.6, the current carrying capacity, connection reliability, and structural strength of the current collector end cover are made more uniform.

In some embodiments, the current collector end cover further includes a structural reinforcement portion at one end of the case connecting portion close to the case, along the thickness direction of the current collector end cover, the maximum size of the structural reinforcement portion is greater than the maximum thickness of the case connecting portion. By adding a structural reinforcement portion to the case connecting portion, the overall strength of the current collector end cover can be increased, and the anti-deformation ability of the current collector end cover can be improved. This is not only beneficial for installation positioning and welding positioning during connection, but also for improving the structural reliability of the battery cell.

In some embodiments, the structural reinforcement portion includes at least one third protrusion, and the third protrusion protrudes in a direction away from the electrode assembly relative to the case connecting portion or protrudes in a direction towards the electrode assembly relative to the case connecting portion. The structural reinforcement portion is formed by providing a third protrusion, which can simplify the structural form of the structural reinforcement portion, facilitate processing and manufacturing, and reduce unnecessary weight increase while providing strength support.

In some embodiments, a projection of the third protrusion on the first plane is annular, wherein the first plane is a plane perpendicular to the thickness direction of the current collector end cover. The third protrusions may be continuously arranged along the outer circumference of the case connecting portion to form an annular reinforcement portion, which may further increase the structural strength of the current collector end cover.

In some embodiments, there are multiple third protrusions, which are spaced apart along a first direction, and the first direction is a direction from the center of the current collector end cover to the edge of the current collector end cover. By providing multiple third protrusions along the direction from the center of the current collector end cover to the edge of the current collector end cover, compared to increasing the overall thickness, it can more effectively balance the strength requirements and energy density requirements, and improve the overall performance of the battery cell.

In some embodiments, the ratio of the projection area of the tab connecting portion on the first plane to the projection area of the current collector end cover on the first plane is a, and the minimum thickness of the tab connecting portion along the thickness direction of the current collector end cover is d₀, wherein 0.05 ≤ d₀/a ≤ 40, wherein the first plane is a plane perpendicular to the thickness direction of the current collector end cover. By setting the ratio a of the projection area of the tab connecting portion on the first plane to the projection area of the current collector end cover on the first plane and the ratio d₀ of the minimum thickness of the tab connecting portion along the thickness direction of the current collector end cover to be between 0.05 and 40, the area where the tab connecting portion is located can be used as an explosion-proof valve with appropriate valve opening strength, thereby achieving more stable and reliable valve opening and pressure relief, and improving the reliability of the battery cell.

In some embodiments, the value of d₀/a satisfies: 0.8 ≤ d₀/a ≤ 1.6. By setting the ratio a of the projection area of the tab connecting portion on the first plane to the projection area of the current collector end cover on the first plane, and the ratio d₀ of the minimum thickness of the tab connecting portion along the thickness direction of the current collector end cover o be between 0.8 and 1.6, the strength of the explosion-proof valve opening of the battery cell can be more appropriately adjusted, thereby improving the reliability of the battery cell.

In some embodiments, the case includes an end wall away from the opening, and the end wall is provided with a second through hole. The electrode assembly also includes a second tab close to the end wall, and the polarity of the second tab is different from the polarity of the first tab. The battery cell also includes an electrode terminal, and the electrode terminal passes through the second through hole and electrically connected to the second tab. The electrode terminal is inserted into the second through hole and electrically connected to the second tab. The current collector end cover is electrically connected to the first tab, and by the current collector end cover, it realizes the integrated design of the current collector plate and the end cover, which can achieve reliable electrical connection between the current collector plate and the end cover before battery assembly, reduce the risk of false welding during battery cell assembly, and thus improve the reliability of the battery cell.

An embodiment of the second aspect of the present application provides a method for manufacturing a battery cell, which includes: providing an electrode assembly, a case and a current collector end cover respectively, wherein the electrode assembly includes a first tab, the case is formed with an accommodating cavity and an opening at one end of the accommodating cavity, the current collector end cover includes a tab connecting portion and a case connecting portion connected to each other, placing the electrode assembly into the accommodating cavity of the case, welding the tab connecting portion of the current collector end cover to the first tab of the electrode assembly, and welding the case connecting portion of the current collector end cover to the case.

In the technical solution of the embodiments of the present application, in the assembly process of the battery cell, the current collector end cover is used as a separate incoming part to achieve reliable connection between the tab connecting portion and the case connecting portion before welding with the first tab and the case. This can simplify the welding process during battery cell assembly, reduce the risk of false welding, and improve the reliability of the battery cell.

In some embodiments, welding the tab connecting portion of the current collector end cover to the first tab of the electrode assembly includes: arranging the current collector end cover at the opening of the case, so that the tab connecting portion abuts against the first tab; emitting a laser from a side of the current collector end cover away from the electrode assembly to penetrate the tab connecting portion to weld the tab connecting portion to the first tab. The current collector end cover is arranged at the opening of the case, so that the tab connecting portion abuts against the first tab, and the laser is emitted from the side of the current collector end cover away from the electrode assembly and penetrates the tab connecting portion to weld the tab connecting portion to the first tab, further simplifying the welding process of the battery cell

An embodiment of the third aspect of the present application provides a battery, which includes the battery cell in the aforementioned embodiments.

An embodiment of the fourth aspect of the present application provides an electrical apparatus including the battery in the embodiments as described above, the battery being used to provide electrical energy.

The foregoing descriptions are merely an overview of the technical solutions in the present application. In order that technical means of the present application can be understood more clearly so that the technical solutions can be implemented according to content of the descriptions, and in order that the foregoing and other objectives, features, and advantages of the present application can be understood more clearly, specific implementations of the present application are described below.

### DESCRIPTION OF DRAWINGS

In the drawings, unless otherwise specified, like reference numerals indicate like or similar parts or elements throughout multiple drawings. These drawings are not necessarily drawn to scale. It is to be understood that these accompanying drawings merely depict some embodiments disclosed by the present application and should not be regarded as limiting the scope of the present application. In order to illustrate the technical solutions of the embodiments of the present application more clearly, the drawings required in the embodiments of the present application are briefly introduced below. Apparently, the drawings described below are only some embodiments of the present application. For those of ordinary skill in the art, other drawings can also be obtained according to these drawings without any creative effort.
FIG. 1 is a schematic structural diagram of a vehicle according to some embodiments of the present application;
FIG. 2 is a schematic exploded structural diagram of a battery according to some embodiments of the present application;
FIG. 3 is a schematic exploded structural diagram of a battery cell according to some embodiments of the present application;
FIG. 4 is a schematic structural diagram of a battery cell according to some embodiments of the present application;
FIG. 5 is a first schematic structural diagram of a current collector end cover according to some embodiments of the present application;
FIG. 6 is a second schematic structural diagram of a current collector end cover according to some embodiments of the present application;
FIG. 7 is a third schematic structural diagram of a current collector end cover according to some embodiments of the present application;
FIG. 8 is a fourth schematic structural diagram of a current collector end cover according to some embodiments of the present application;
FIG. 9 is a fifth schematic structural diagram of a current collector end cover according to some embodiments of the present application;
FIG. 10 a sixth schematic structural diagram of a current collector end cover according to some embodiments of the present application;
FIG. 11 a seventh schematic structural diagram of a current collector end cover according to some embodiments of the present application;
FIG. 12 an eighth schematic structural diagram of a current collector end cover according to some embodiments of the present application;
FIG. 13 a ninth schematic structural diagram of a current collector end cover according to some embodiments of the present application;
FIG. 14 is a top view of a current collector end cover according to some embodiments of the present application;
FIG. 15 is a top view of a current collector end cover according to some embodiments of the present application;
FIG. 16 is a schematic structural diagram of a battery cell according to some embodiments of the present application;
FIG. 17 is a flowchart of a method for manufacturing a battery cell according to some embodiments of the present application.

### Description of reference numerals:

1000. Vehicle;
100. Battery; 200. Controller; 300. Motor;
10. Box; 11. First portion; 12. Second portion;
20. Battery cell; 21. Current collector end cover; 211. Electrode terminal; 22. Case; 23. Electrode assembly; 24. Tab; 25. First plane;241. First tab; 242. Second tab; 212. Tab connecting portion; 213. Case connecting portion; 2121. First main body; 2122. First connecting portion; 2131. Second connecting portion; 2133. Structural reinforcement portion; 2134. Third protrusion.

### DESCRIPTION OF EMBODIMENTS

Embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned DESCRIPTION OF DRAWINGS are intended to cover non-exclusive inclusion.

In the description of the embodiments of the present application, the technical terms "first", "second", etc., are used only to distinguish between different objects and are not to be understood as indicating or implying a relative importance or implicitly specifying the number, particular order, or primary and secondary relationship of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise specified and limited, the technical terms "mounting", "connection", "connection", and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of the power batteries, the market demand is also constantly increasing.

Cylindrical batteries are a common type of battery. The cylindrical battery cell in the related art includes a case, an electrode assembly and an end cover. The tab of the negative electrode in the cylindrical battery cell is usually first connected to a current collector plate, and then the current collector plate is connected to the end cover, and then connected to the case via the end cover, so that the case is finally charged.

In the related art, the end cover of the cylindrical battery cell is located on the outside of the negative current collector plate, and electrical connection is achieved by penetration welding from the end cover side. However, due to the inherent poor reliability disadvantages of penetration welding and the flatness problem of the material of the end cover, the existing penetration welding is prone to cause false welding problems between the current collector plate and the end cover, resulting in poor electrical connection of the battery cell, affecting the performance and reliability of the battery cell. Moreover, the method of penetration welding the end cover and the current collector plate from the end cover side may damage the coating on the surface of the end cover, reducing the reliability of the end cover.

Based on the above considerations, in order to solve the problem of false welding between the current collector plate and the end cover, the present application proposes a battery cell, including a current collector end cover connected to a tab and a case, by connecting a tab connecting portion on the current collector end cover to a first tab, and connecting a case connecting portion to the case, that is, an integrated design of the current collector plate and the end cover can be realized by the current collector end cover, and a reliable connection between the tab connecting portion and the case connecting portion can be achieved before the step of connecting the tab connecting portion to the first tab, which not only reduces the number of components during battery assembly and simplifies the welding process, but also reduces the risk of false welding and improves the reliability of the battery cell.

The battery cell disclosed in the embodiments of the present application can be used, but is not limited to, in an electrical apparatus, such as a vehicle, a ship, or an aircraft. The power supply system of the electrical apparatus can be formed by the battery cell, battery, and the like disclosed in the present application, which is beneficial to solving the problem of poor electrical connection of the battery cell and improving reliability of the battery cell.

An embodiment of the present application provides an electrical apparatus with a battery used as a power source. The electrical apparatus may be, but is not limited to, a mobile phone, a tablet, a laptop, an electric toy, an electric tool, a storage battery car, an electric vehicle, a ship, a spacecraft, etc. The electric toy may include fixed or mobile electric toys, such as game consoles, electric vehicle toys, electric ship toys, and electric airplane toys. The spacecraft may include airplanes, rockets, space shuttles, spaceships, etc.

For the convenience of description in the following embodiments, an electrical apparatus being a vehicle 1000 according to an embodiment of the present application is taken as an example for the description.

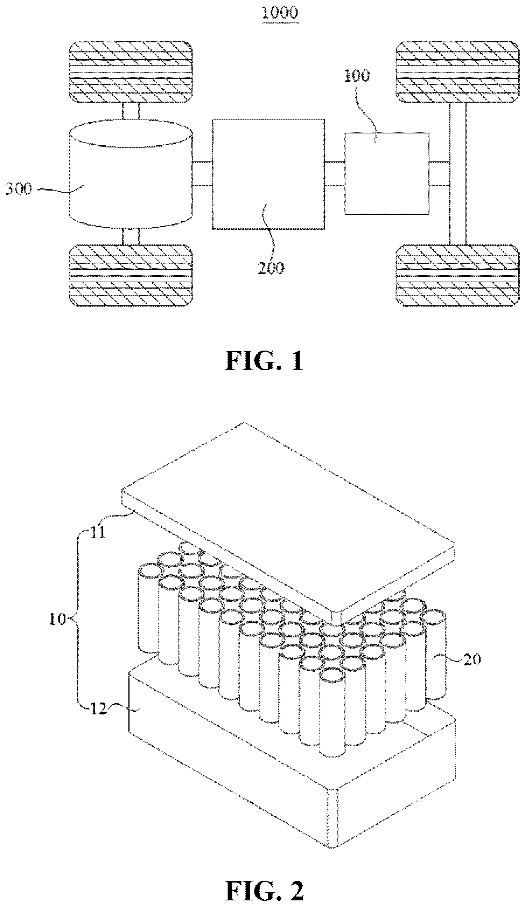

Referring to FIG. 1, FIG. 1 is a schematic structural diagram of a vehicle 1000 according to some embodiments of the present application. The vehicle 1000 may be a fuel vehicle, a gas vehicle or a new energy vehicle. The new energy vehicle may be an all-electric vehicle, a hybrid vehicle, an extended range electric vehicle, or the like. A battery 100 is provided inside the vehicle 1000. The battery 100 may be provided at the bottom, or head, or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present application, the battery 100 may not only be used as an operating power source for the vehicle 1000, but also as a driving power source for the vehicle 1000, to replace or partially replace fuel or natural gas to provide driving power for the vehicle 1000.

Referring to FIG. 2, FIG. 2 is a schematic exploded structural diagram of a battery 100 according to some embodiments of the present application. The battery 100 includes a box 10 and a battery cell 20, where the battery cell 20 is accommodated within the box 10. The box 10 is used to provide an accommodating space for the battery cell 20, and the box 10 can be of various structures. In some embodiments, the box 10 may include a first portion 11 and a second portion 12, the first portion 11 and the second portion 12 covering each other, and the first portion 11 and the second portion 12 together defining the accommodating space for accommodating the battery cell 20. The second portion 12 may be of a hollow structure with an opening at one end, and the first portion 11 may be of a plate-like structure, where the first portion 11 covers the opening side of the second portion 12 so that the first portion 11 and the second portion 12 together define the accommodating space. The first portion 11 and the second portion 12 may each be of a hollow structure with an opening at one end, where the opening side of the first portion 11 covers the opening side of the second portion 12. Of course, the box 10 formed by the first portion 11 and the second portion 12 may be of a variety of shapes, such as a cylinder and a rectangular solid.

In the battery 100, there may be a plurality of battery cells 20, and the plurality of battery cells 20 may be connected in series or in parallel or in parallel-series connection, where the parallel-series connection means that the plurality of battery cells 20 are connected in both series and parallel. The plurality of battery cells 20 may be directly connected together in series or in parallel or in parallel-series connection, and then the whole composed of the plurality of battery cells 20 may be accommodated in the box 10. Of course, the battery 100 may also be in the form of a battery module first formed by the plurality of battery cells 20 being connected in series or in parallel or in parallel-series connection, then the plurality of battery modules may be connected in series or in parallel or in parallel-series connection to form a whole, and accommodated in the box 10. The battery 100 may further include other structures, for example, the battery 100 may further include a bus component configured to realize electrical connections between the plurality of battery cells 20.

Each battery cell 20 may be a secondary battery or a primary battery; or it may be a lithium-sulfur battery, a sodium-ion battery or a magnesium-ion battery, but is not limited thereto. The battery cell 20 may be in cylindrical, flat, cuboid shape, or in other shapes, or the like.

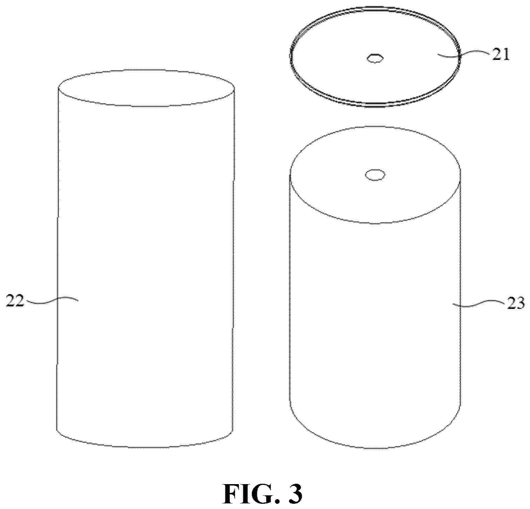

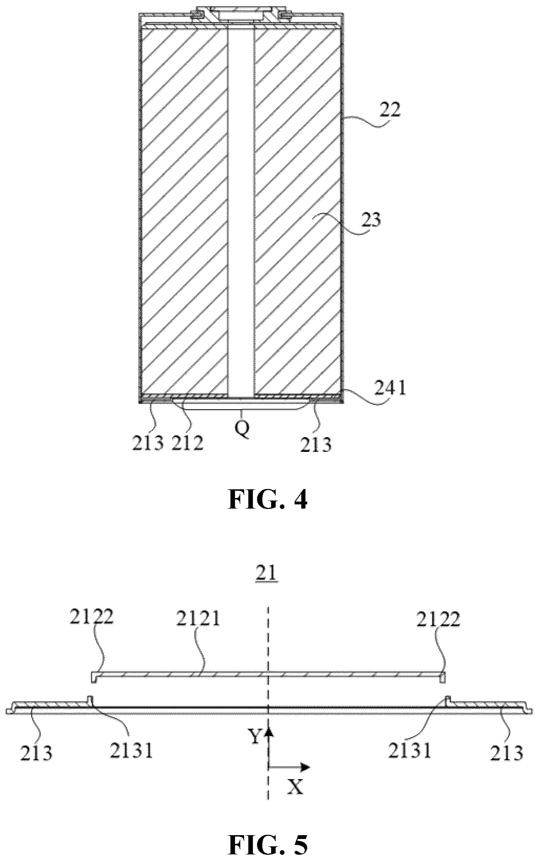

According to some embodiments of the present application, referring to Figs. 3 and 4, FIG. 3 is a schematic exploded structural diagram of a battery cell 20 according to some embodiments of the present application, and FIG. 4 is a schematic structural diagram of a battery cell according to some embodiments of the present application. The present application provides a battery cell 20, which includes an electrode assembly 23, a case 22, and a current collector end cover 21. The electrode assembly 23 includes a first tab 241. The case 22 is formed with an accommodating cavity for accommodating the electrode assembly 23 and an opening at one end of the accommodating cavity. The current collector end cover 21 is connected to the case 22 to close the opening. The current collector end cover 21 includes a tab connecting portion 212 and a case connecting portion 213 connected to each other, wherein the tab connecting portion 212 is connected to the first tab 241, and the case connecting portion 213 is connected to the case 22.

In the embodiments of the present application, the battery cell 20 may include a lithium-ion secondary battery, a lithium-ion primary battery, a lithium-sulfur battery, a sodium/lithium-ion battery, a sodium-ion battery, a magnesium-ion battery, or the like, which is not limited in the embodiments of the present application. The battery cell 20 may be in a cylindrical shape, a flat shape, a cuboid shape, or another shape, which is also not limited in the embodiments of the present application.

The electrode assembly 23 is a component in the battery cell 20 where an electrochemical reaction occurs. The accommodating cavity formed by the case 22 may contain one or more electrode assemblies 23. The electrode assembly 23 is mainly formed by winding or laminating a positive electrode plate and a negative electrode plate, and a separator is usually arranged between the positive electrode plate and the negative electrode plate. The portions, with active materials, of the positive electrode plate and the negative electrode plate constitute a main body portion of the electrode assembly 23, and the portions, without the active materials, of the positive electrode plate and the negative electrode plate respectively constitute tabs 24. The positive tab and the negative tab may be co-located at one end of a main body portion or located at two ends of the main body portion, respectively. In charging and discharging processes of the battery cell 20, the positive electrode active material and the negative electrode active material react with the electrolyte, and the tabs 24 are connected to electrode terminals 211 to form a current loop. In the embodiments of the present application, the first tab 241 may be a negative tab.

The current collector end cover 21 refers to a component that covers the opening of the case 22 to isolate the accommodating cavity for the battery cell 20 from an external environment. Without limitation, the shape of the current collector end cover 21 may be adapted to the shape of the case 22 to fit the case 22.

In the embodiments of the present application, the current collector end cover 21 includes a tab connecting portion 212 and a case connecting portion 213 connected to each other. The tab connecting portion 212 is connected to the first tab 241, and its function is equivalent to a current collector plate. The case connecting portion 213 is located on the side of the tab connecting portion 212 close to the case 22 and is connected to the case 22, so that the current collector end cover 21 acts as an end cover to close the opening of the case 22. That is, the current collector end cover 21 combines the functions of the current collector plate and the end cover, and the current collector end cover 21 is an integrated structure of the current collector plate and the end cover. The tab connecting portion 212 and the case connecting portion 213 may be integrally formed, or may be manufactured separately and then fixedly connected together. The current collector end cover 21 can respectively connect the tab connecting portion 212 to the first tab 241 and the case connecting portion 213 to the case 22. The connection method can also be welding, such as laser welding or friction welding.

The case 22 is an assembly configured to match the current collector end cover 21 to form the accommodating cavity for the battery cell 20. The formed accommodating cavity may be configured to accommodate the electrode assembly 23, electrolyte, and other components. The case 22 and the current collector end cover 21 may be separate components, an opening may be formed on the case 22, and at the opening, the opening is closed by the current collector end cover 21 so as to form the accommodating cavity for the battery cell 20. Without limitation, the current collector end cover 21 and the case 22 may also be integrated. Specifically, the current collector end cover 21 and the case 22 may form a common connection surface before other components enter the case. When an interior of the case 22 is required to be encapsulated, the current collector end cover 21 is enabled to close the case 22. The case 22 may be in various shapes and sizes, such as a cuboid, a cylinder, or a hexagonal prism. Specifically, the shape of the case 22 may be determined according to the specific shape and size of the electrode assembly 23. The case 22 may be made of various materials, such as copper, iron, aluminum, stainless steel, and aluminum alloy, which is not limited in the embodiments of the present application.

In the embodiments of the present application, reliable connection between the tab connecting portion 212 and the case connecting portion 213 can be achieved before the connection step between the tab connecting portion 212 and the first tab 241. This not only reduces the number of components during the assembly of the battery 100, simplifies the welding process, but also reduces the risk of false welding and improves the reliability of the battery cell 20.

According to some embodiments of the present application, the tab connecting portion 212 is welded to the first tab 241 to form a welding area Q. The projection of the welding area Q on the current collector end cover 21 is offset from the case connecting portion 213.

As shown in FIG. 4, the tab connecting portion 212 may be located in a central area of the current collector end cover 21, and the case connecting portion 213 may be located in a peripheral area surrounding the tab connecting portion 212. In some examples, the tab connecting portion 212 may have a partial overlap area with the case connecting portion 213 along the thickness direction of the current collector end cover 21, or they may not overlap but be arranged adjacent to each other, but the overlapping area will not extend to the area of the tab connecting portion 212 used for welding with the first tab 241. In this way, the case connecting portion 213 can expose the area of the tab connecting portion 212 used for welding with the first tab 241, so as to facilitate welding of the tab connecting portion 212 with the first tab 241 and form a welding area Q during the assembly of the battery cell 20. In some examples, the tab connecting portion 212 and the first tab 241 are laser welded to form a welding area Q. For example, a laser is emitted from the outside of the current collector end cover 21 (the side away from the electrode assembly), and the tab connecting portion 212 and the first tab 241 (at least a portion) are melted in turn to form the welding area Q.

In the embodiments of the present application, the projection of the welding area Q formed by welding the tab connecting portion 212 and the first tab 241 on the current collector end cover 21 is offset from the case connecting portion 213, which is more conducive to the connection between the current collector end cover 21 and the first tab 241 and the case 22 respectively, simplifies the manufacturing process of the battery cell 20, and can reduce the weight of the current collector end cover 21, which is conducive to improving the energy density of the battery cell 20.

According to some embodiments of the present application, the fracture elongation of the case connecting portion 213 is smaller than the fracture elongation of the tab connecting portion 212.

In the embodiments of the present application, the fracture elongation is a ratio of the length increment of the material before it is stretched to fracture, to the original length. The specific test method for the fracture elongation is as follows: taking a tensile specimen with an original length of L0, and stretching the tensile specimen until it breaks on a tensile testing machine. The length of the tensile specimen before it is stretched to fracture is Lh, and the fracture elongation of the tensile specimen is Δh= (Lh-L0)/L0×100%. The specific conditions and requirements of the tensile test can be implemented in accordance with the relevant standards, for example, in accordance with the relevant provisions and requirements in the Chinese national standard GB/T 228.1-2021 "Tensile Test of Metal Materials Part 1: Room Temperature Test Method".

The fracture elongation is closely related to factors such as material composition, structure and processing. Generally speaking, the higher the fracture elongation, the better the ductility of the material, and the material can undergo plastic deformation under the action of external force, thereby alleviating stress concentration and improving the tensile strength and impact resistance of the material. Secondly, materials with high fracture elongation have better toughness and can absorb energy when subjected to external forces such as impact or vibration, thereby reducing the possibility of accidents. In addition, materials with high fracture elongation can also improve the service life and reliability of the product.

In the embodiments of the present application, the current collector end cover 21 needs to be connected to the first tab 241 and the case 22 respectively. When selecting materials and processing, it is necessary to consider the welding process requirements and conductive performance requirements when welding with the first tab 241, and at the same time, it is also necessary to consider the structural strength requirements as a battery end cover. By reasonably selecting the material type and/or processing method according to the performance requirements of the tab connecting portion 212 and the case connecting portion 213 respectively, the fracture elongation of the case connecting portion 213 can be made greater than the fracture elongation of the tab connecting portion 212. In this way, the tab connecting portion 212 can be designed with more consideration given to the current carrying problem with the first tab 241, while the case connecting portion 213 can provide support for the overall structural strength of the current collector end cover 21. In some embodiments, the fracture elongation of the tab connecting portion 212 is different from the fracture elongation of the case connecting portion 213, so that the tab connecting portion 212 located on the current collector end cover 21 will form a structurally weakened area relative to the case connecting portion 213. Once thermal runaway occurs inside the battery cell 20, the welded area between the tab connecting portion 212 and the first tab 241 can rupture as a weak area of the current collector end cover 21, thereby improving the reliability of pressure relief to a certain extent.

In the embodiments of the present application, by setting the fracture elongation of the tab connecting portion 212 to be smaller than the fracture elongation of the case connecting portion 213, it is possible to better balance the different connection requirements of the tab connecting portion 212 and the case connecting portion 213, as well as the overall structural strength requirements of the current collector end cover 21. Also, the tab connecting portion 212 will preferentially rupture when the internal pressure of the battery cell 20 is high, in order to facilitate pressure relief, thereby improving the reliability of the battery cell 20.

According to some embodiments of the present application, a ratio S of the fracture elongation of the case connecting portion 213 to the fracture elongation of the tab connecting portion 212 satisfies 1.1 ≤ S ≤ 2.2.

In the embodiments of the present application, the case connecting portion 213 and the tab connecting portion 212 are both part of the current collector end cover 21. Therefore, when selecting materials and formulating processing technology, in addition to considering the performance requirements of the case connecting portion 213 and the tab connecting portion 212 respectively, it is also necessary to consider the stability and reliability of the overall performance of the current collector end cover 21 constituted by the two. Therefore, the difference between the fracture elongation of the case connecting portion 213 and the fracture elongation of the tab connecting portion 212 should not be too large, otherwise the current collector end cover 21 will have insufficient overall performance reliability due to excessive local performance differences, thereby affecting the service life of the current collector end cover 21. Optionally, the ratio S of the fracture elongation of the case connecting portion 213 to the fracture elongation of the tab connecting portion 212 may be 1.1, 1.3, 1.5, 1.7, 1.9, 2.0 or 2.2, etc.

In the embodiments of the present application, by setting the ratio S of the fracture elongation of the case connecting portion 213 to the fracture elongation of the tab connecting portion 212 to satisfy 1.1 ≤ S ≤ 2.2, it is possible to balance the stability and service life of the performance of the current collector end cover 21 while meeting the structural strength and connection requirements of the current collector end cover 21.

According to some embodiments of the present application, the fracture elongation S1 of the tab connecting portion 212 satisfies 0.2 ≤ S1 ≤ 0.3, and the fracture elongation S2 of the case connecting portion 213 satisfies 0.35 ≤ S2 ≤ 0.45.

In the embodiments of the present application, when the fracture elongation of the material is larger, its ductility is better. On the contrary, when the fracture elongation is smaller, the material is more likely to fracture during the stress process. Reasonable selection of the fracture elongations of the tab connecting portion 212 and the case connecting portion 213 can make the two better meet the connection requirements and make the tab connecting portion 212 rupture first when the internal pressure of the battery cell 20 is too high. Optionally, the fracture elongation S1 of the tab connecting portion 212 may be 0.2, 0.24, 0.26, 0.28, 0.3, etc., and the fracture elongation S2 of the case connecting portion 213 may be 0.35, 0.38, 0.4, 0.42, 0.45, etc. In some examples, the tab connecting portion 212 may be made of copper with a fracture elongation of 0.24, such as material CuT2, and the case connecting portion 213 may be made of nickel-plated steel with a fracture elongation of 0.4.

In the embodiments of the present application, the reasonable selection of the fracture elongation of the tab connecting portion 212 and the fracture elongation of the case connecting portion 213 can enable the performance of the current collector end cover 21 to balance the connection requirements and structural strength requirements.

According to some embodiments of the present application, FIG. 5 is a first schematic structural diagram of the current collector end cover according to some embodiments of the present application. As shown in FIG. 5, the tab connecting portion 212 includes a first main body 2121 and a first connecting portion 2122 connected to the first main body 2121 and arranged along an outer edge of the first main body 2121. The case connecting portion 213 includes a second connecting portion 2131 and a first through hole. An orthographic projection of the first main body 2121 on the case connecting portion 213 is located within the first through hole, and the first connecting portion 2122 is welded to the second connecting portion 2131.

In the embodiments of the present application, the tab connecting portion 212 includes a first main body 2121, the first main body 2121 is used to connect with the first tab 241, and a first connecting portion 2122 provided on the outer edge of the first main body 2121 is used to connect with the case connecting portion 213. The first main body 2121 and the first connecting portion 2122 may be an integral structure. The shape of the first connecting portion 2122 is any shape that can be connected to the second connecting portion 2131. The shape of the first connecting portion 2122 can be the same as the shape of the second connecting portion 2131. As an example, the shape of the first connecting portion 2122 is a protrusion or a flat plate.

In the embodiments of the present application, the first through hole is defined by the second connecting portion 2131, the first through hole is formed in the central area of the case connecting portion 213, and the second connecting portion 2131 is arranged along the edge of the first through hole. In some examples, the first through hole is defined by the second connecting portion 2131. The shape of the first through hole can be any polygon, such as circle, square, rectangle, triangle, rhombus, hexagon, etc. The shape of the first main body 2121 can be adapted to the shape of the first through hole, and the orthographic projection of the first main body 2121 on the case connecting portion 213 is located within the first through hole, that is, the projection area of the first main body 2121 is smaller than the area of the first through hole, so as to facilitate the connection between the first main body 2121 of the current collector end cover 21 and the first tab 241.

In the embodiments of the present application, by providing a first through hole on the case connecting portion 213, an orthographic projection of the first main body 2121 included in the tab connecting portion 212 on the case connecting portion 213 is located within the first through hole, and the first connecting portion 2122 is welded to the second connecting portion 2131, which can better achieve the integrated molding of the current collector end cover 21, thereby reducing the risk of false welding between the current collector plate and the end cover caused by the use of penetration welding, simplifying the manufacturing process and reducing manufacturing costs.

According to some embodiments of the present application, the first connecting portion 2122 includes a first protrusion extending in a direction away from or towards the electrode assembly 23, along a first direction X, the first protrusion abuts against the second connecting portion 2131, and the first direction X is a direction from the center of the current collector end cover 21 to the edge of the current collector end cover 21.

In the embodiments of the present application, the first protrusion can be arranged on the outer edge of the first main body 2121, and the extension direction of the first protrusion is from the first main body 2121 to the direction away from or towards the electrode assembly 23. By abutting the first protrusion against the second connecting portion 2131, the first protrusion can be used to guide the tab connecting portion 212 to complete rapid positioning when connecting with the case connecting portion 213, which is beneficial to the welding connection between the first connecting portion 2122 and the second connecting portion 2131 in the subsequent process, reduces the accuracy requirements for the operator during assembly, and makes the connection between the tab connecting portion 212 and the case connecting portion 213 simpler and more convenient. In addition, by providing the first protrusion, the welding position of the tab connecting portion 212 and the case connecting portion 213 can be offset from the connection position with the first tab 241. Also, the first protrusion and the case connecting portion 213 can also be connected by other welding methods besides penetration welding, such as butt welding, thereby providing more reliable connection methods.

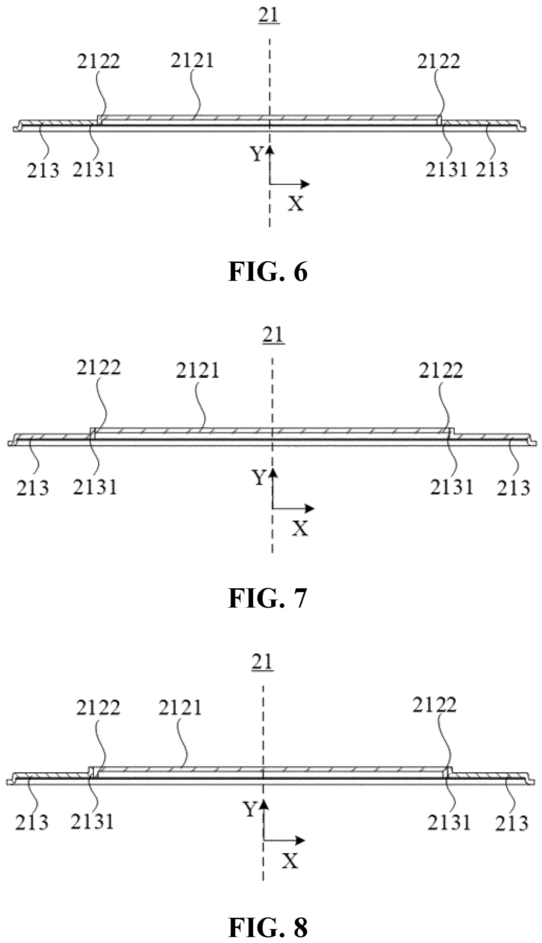

As an example, FIG. 6 is a second schematic structural diagram of the current collector end cover 21 according to some embodiments of the present application. As shown in FIG. 6, the first connecting portion 2122 includes a first protrusion extending in a direction away from the electrode assembly 23, and along the first direction X, the first protrusion abuts against the second connecting portion 2131. In this way, the tab connecting portion 212 can be better attached to the first tab 241 for welding thereto, thereby achieving a more reliable electrical connection.

In the embodiments of the present application, by providing a first protrusion on the first connecting portion 2122 for connecting with the case connecting portion 213, a simpler and more reliable connection between the tab connecting portion 212 and the case connecting portion 213 can be achieved.

According to some embodiments of the present application, the second connecting portion 2131 includes a second protrusion extending in a direction away from or towards the electrode assembly 23, along a first direction X, the second protrusion abuts against the first connecting portion 2122, and the first direction X is a direction from the center of the current collector end cover 21 to the edge of the current collector end cover 21.

In the embodiments of the present application, the second protrusion can be arranged at the edge of the case connecting portion 213 close to the tab connecting portion 212, and the extension direction of the second protrusion is the direction from the case connecting portion 213 towards or away from the electrode assembly 23, which facilitates the contact between the second protrusion and the first connecting portion 2122. This can use the second protrusion to guide the tab connecting portion 212 to complete rapid positioning when connected to the case connecting portion 213, which is conducive to the welding connection between the first connecting portion 2122 and the second connecting portion 2131 in the subsequent process, reduces the accuracy requirements for the operator during assembly, and makes the connection between the tab connecting portion 212 and the case connecting portion 213 simpler and more convenient. The second protrusion and the tab connecting portion 212 may also be connected by other welding methods other than penetration welding, such as butt welding, thereby providing more reliable connection methods.

FIG. 7 is a third schematic structural diagram of the current collector end cover 21 according to some embodiments of the present application. As shown in FIG. 7, the second connecting portion 2131 includes a second protrusion extending in the direction towards the electrode assembly 23, and along the first direction X, the second protrusion abuts against the first connecting portion 2122.

In the embodiments of the present application, by providing a second protrusion on the second connecting portion 2131, the connection between the tab connecting portion 212 and the case connecting portion 213 is made simpler and more reliable.

According to some embodiments of the present application, the first connecting portion 2122 includes a first protrusion extending in a direction away from the electrode assembly 23, and the second connecting portion 2131 includes a second protrusion extending in a direction towards the electrode assembly 23. Along the first direction X, the first protrusion abuts against the second protrusion, and the first direction X is the direction from the center of the current collector end cover 21 to the edge of the current collector end cover 21. Alternatively, the first connecting portion 2122 includes a second protrusion extending in a direction towards the electrode assembly 23, along the first direction X, the first protrusion abuts against the second protrusion. The first direction X is the direction from the center of the current collector end cover 21 to the edge of the current collector end cover 21.

In the embodiments of the present application, the first protrusion is arranged on the outer edge of the first main body 2121, and the first protrusion protrudes in the direction away from the electrode assembly 23 relative to the first main body 2121; the second protrusion is arranged on the edge of the case connecting portion 213 close to the tab connecting portion 212, and the second protrusion protrudes in the direction towards the electrode assembly 23. The first protrusion and the second protrusion are abutted to complete the positioning of the tab connecting portion 212 and the case connecting portion 213 before welding, which is beneficial to the welding connection between the first connecting portion 2122 and the second connecting portion 2131 in the subsequent process. The first protrusion and the second protrusion may be connected by penetration welding, or by other welding methods other than penetration welding, such as butt welding. The protrusion height of the first protrusion and the protrusion height of the second protrusion may be the same or different.

For example, FIG. 8 is a fourth schematic structural diagram of the current collector end cover 21 according to some embodiments of the present application. As shown in FIG. 8, the first connecting portion 2122 includes a first protrusion extending away from the electrode assembly 23, and the second connecting portion 2131 includes a second protrusion extending in the direction towards the electrode assembly 23. Along the first direction X, the first protrusion abuts against the second protrusion.

In the embodiments of the present application, by providing a first protrusion on the first connecting portion 2122 and a second protrusion on the second connecting portion 2131, the positioning between the first protrusion and the second protrusion can reduce the accuracy requirements for operators when assembling the current collector end cover 21, and also facilitate the welding process between the tab connecting portion 212 and the case connecting portion 213, thereby achieving a more reliable connection.

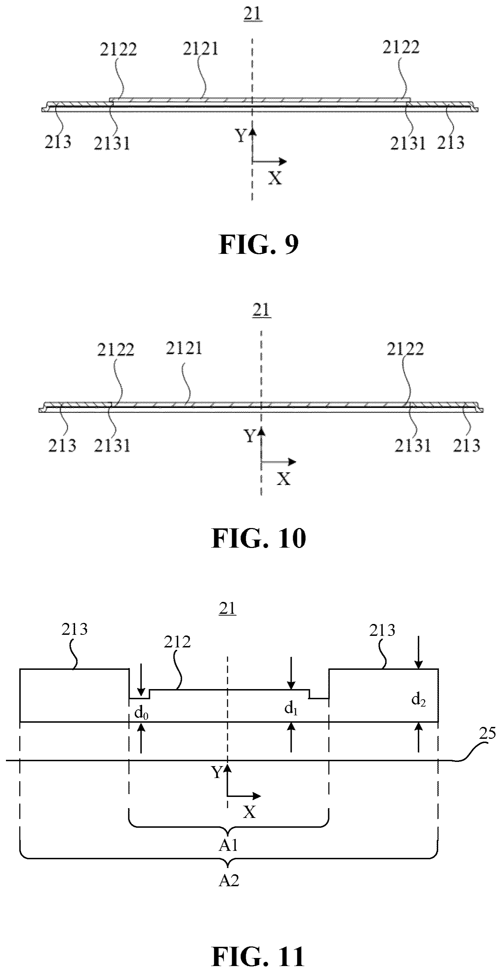

According to some embodiments of the present application, FIG. 9 is a fifth schematic structural diagram of the current collector end cover 21 according to some embodiments of the present application. As shown in FIG. 9, the tab connecting portion 212 is in a shape of a flat plate, and the orthographic projection of the first connecting portion 2122 on the case connecting portion 213 at least partially overlaps with the second connecting portion 2131.

In the embodiments of the present application, the tab connecting portion 212 is in the shape of a flat plate, the first connecting portion 2122 is arranged around the periphery of the first main body 2121, and the projection area of the tab connecting portion 212 along its thickness direction is larger than the area of the first through hole on the case connecting portion 213, so that the orthographic projection of the first connecting portion 2122 on the case connecting portion 213 at least partially overlaps with the second connecting portion 2131, that is, the first connecting portion 2122 at least partially overlaps one side surface of the second connecting portion 2131, so that the first connecting portion 2122 and the second connecting portion 2131 can be connected by welding.

In the embodiments of the present application, by setting the tab connecting portion 212 as a flat plate and making the orthographic projection of the first connecting portion 2122 on the case connecting portion 213 overlap at least partially with the second connecting portion 2131, the size of the current collector end cover 21 along the thickness direction can be reduced while considering the connection positioning of the tab connecting portion 212 and the case connecting portion 213, which is beneficial for improving the energy density of the battery.

According to some embodiments of the present application, FIG. 10 is a sixth schematic structural diagram of the current collector end cover 21 according to some embodiments of the present application. As shown in FIG. 10, the side of the tab connecting portion 212 facing the electrode assembly 23 is flush with the surface of the side of the case connecting portion 213 facing the electrode assembly 23.

In the embodiments of the present application, the thickness of the tab connecting portion 212 may be the same as or different from the thickness of the case connecting portion 213, but the surface of the current collector end cover 21 facing the electrode assembly 23 is a flat surface.

In the embodiments of the present application, by aligning the surface of the electrode assembly 23 facing the side of the tab connecting portion 212 with the surface of the electrode assembly 23 facing the side of the case connecting portion 213, it is possible to reduce the height of the current collector end cover 21 while maintaining the strength of the current collector end cover 21, thereby increasing the capacity of the accommodating cavity of the case 22 and reducing the height of the battery cell 20.

According to some embodiments of the present application, a base metal of the tab connecting portion 212 is different from a base metal of the case connecting portion 213.

In the embodiments of the present application, the base metal refers to the main component metal in the material (such as an alloy or a composite material), such as a metal element with a mass fraction greater than 50%. The performance of different base metal materials will also be different to a certain extent. The tab connecting portion 212 needs to be connected to the first tab 241, and the welding process requirements and conductive performance requirements when welding with the first tab 241 need to be considered during material selection and processing; the case connecting portion 213 needs to be connected to the case 22, and the structural strength requirements as a battery end cover need to be considered. By reasonably selecting the material type according to the performance requirements of the tab connecting portion 212 and the case connecting portion 213 respectively, the base metals of the tab connecting portion 212 and the case connecting portion 213 can be different, so that the tab connecting portion 212 can meet the reliable connection and current carrying problems with the first tab 241, and the case connecting portion 213 can meet the overall structural strength requirements of the current collector end cover 21.

In the embodiments of the present application, by setting the base metal of the tab connecting portion 212 and the case connecting portion 213 to be different, it is possible to better balance the different connection requirements of the tab connecting portion 212 and the case connecting portion 213, as well as the overall strength requirements of the current collector end cover 21, thereby improving the performance and reliability of the battery cell 20.

According to some embodiments of the present application, the base metal of the tab connecting portion 212 is copper; The base metal of the case connecting portion 213 is iron or aluminum.

In the embodiments of the present application, copper has good electrical conductivity and corrosion resistance, and can play a role in quickly conducting electrons during the electrochemical reaction. The base metal of the tab connecting portion 212 is copper, so that when the tab connecting portion 212 is connected to the first tab 241, the current carrying capacity of the tab connecting portion 212 and the first tab 241 is satisfied. Materials whose base metal is copper include pure copper, nickel-plated copper, iron-plated copper, copper-nickel composite materials, copper-iron composite materials, and the like.

Iron is a common material with the advantages of being strong, corrosion-resistant and low-cost. Materials with iron as the base metal mainly include various types of steel, such as stainless steel, nickel-plated steel, etc. Aluminum has the properties of being hard, resistant to high temperatures and having a long service life. Materials with aluminum as the base metal include aluminum or aluminum alloys. The strength of the material whose base metal is iron or aluminum is relatively high, and the material used as the case connecting portion 213 can meet the structural strength requirements of the current collector end cover 21.

In the embodiments of the present application, by using copper as the base metal of the tab connecting portion 212 and iron or aluminum as the base metal of the case connecting portion 213, the current carrying capacity and structural strength of the current collector end cover 21 can be improved, and the reliability of the battery cell 20 can be enhanced.

According to some embodiments of the present application, the base metal of the tab connecting portion 212 is the same as the base metal of the case connecting portion 213.

In the embodiments of the present application, the base metal of the tab connecting portion 212 and the case connecting portion 213 of the current collector end cover 21 is the same, which means that the materials of the two are similar or even the same. That is, when preparing the current collector end cover 21, the tab connecting portion 212 and the case connecting portion 213 can be integrally formed with the same material. For example, the current collector end cover 21 can be manufactured by stamping or the like. The current collector end cover 21 serves as both an end cover and a current collector, which can make the structure of the current collector end cover 21 simpler, thereby simplifying the production process of the current collector end cover 21 and reducing the manufacturing cost of the current collector end cover 21. In other examples, the base metal of the tab connecting portion 212 and the case connecting portion 213 is the same, but different processing techniques, such as heat treatment, can be used to make the performance of the tab connecting portion 212 and the case connecting portion 213 different, thereby meeting different performance requirements of the two.

In the embodiments of the present application, by setting the base metal of the tab connecting portion 212 and the case connecting portion 213 to be the same, it can simplify the preparation of the current collector end cover 21 and reduce the risk of unreliable connection between the tab connecting portion 212 and the case connecting portion 213.

According to some embodiments of the present application, the base metal of the tab connecting portion 212 and the case connecting portion 213 is copper.

In the embodiments of the present application, copper has good electrical conductivity and can play a role in quickly conducting electrons during electrochemical reactions. Also, copper also has strong corrosion resistance. It is understandable that the base metal of the tab connecting portion 212 and the case connecting portion 213 being copper does not mean that the materials of the two are exactly the same. Different elements can also be doped to form different alloys or composite materials so that the two have different properties. In some examples, the tab connecting portion 212 may be copper, and the case connecting portion 213 may be a copper alloy or a copper composite material, such as nickel-plated copper.

In the embodiments of the present application, copper is selected as the base metal for the tab connecting portion 212 and the case connecting portion 213, which can improve the current carrying capability and corrosion resistance of the current collector end cover 21, and enhance the reliability of the battery cell 20.

According to some embodiments of the present application, the maximum thickness of the tab connecting portion 212 is d1, the minimum thickness of the case connecting portion 213 is d₂, and d1 ≤ d2 is satisfied.

In the embodiments of the present application, due to the influence of factors such as manufacturing process and material, the tab connecting portion 212 and the case connecting portion 213 may have uneven thickness. FIG. 11 is a seventh schematic structural diagram of the current collector end cover 21 according to some embodiments of the present application. As shown in FIG. 11, the second direction Y is the same as the thickness direction of the current collector end cover 21, the maximum thickness d1 is the maximum dimension of the tab connecting portion 212 along the second direction Y, and the minimum thickness d2 is the minimum dimension of the case connecting portion 213 along the second direction Y, and d1 ≤ d2 means that the thickness of the case connecting portion 213 is greater than the thickness of the tab connecting portion 212.

In the embodiments of the present application, the thicker the component, the greater the bending strength of the component. The maximum thickness d1 of the tab connecting portion 212 should be less than or equal to the minimum thickness d2 of the case connecting portion 213. In fact, increasing the thickness of the case connecting portion 213 is equivalent to enhancing the overall strength and deformation resistance of the current collector end cover 21. Also, a smaller thickness of the tab connecting portion 212 is beneficial for reducing internal resistance and the weight of the current collector end cover 21, and improving the performance of the battery cell 20.

According to some embodiments of the present application, the maximum thickness of the tab connecting portion 212 is d1, the minimum thickness of the case connecting portion 213 is d2, and 0.5 ≤ d1/d2 ≤ 1 is satisfied.

In the embodiments of the present application, the ratio of the maximum thickness d1 of the tab connecting portion 212 to the minimum thickness d2 of the case connecting portion 213 is too small, that is, the maximum thickness d1 of the tab connecting portion 212 is too thin compared to the minimum thickness d2 of the case connecting portion 213, and the overall structural strength of the current collector end cover 21 will be weakened. After electrical connection, the gas generation of the battery cell 20 will cause the current collector end cover 21 to bulge or even deform. However, the ratio that is too large will lead to unnecessary weight increase, which is not conducive to improving the battery energy density.

Optionally, d1/d2 can be 0.5, 0.6, 0.7, 0.8, 0.9 or 1, etc.

In the embodiments of the present application, by controlling the ratio of the thickness d1 of the tab connecting portion 212 to the thickness d2 of the case connecting portion 213 within an appropriate range, it is possible to balance the structural strength of the current collector end cover 21 and the energy density of the battery cell 20, thereby improving the performance of the battery cell 20.

According to some embodiments of the present application, the ratio a of the projection area of the tab connecting portion 212 on the first plane 25 to the projection area of the current collector end cover 21 on the first plane 25 satisfies: 0.1 ≤ a ≤ 0.95, where the first plane 25 is a plane perpendicular to the thickness direction of the current collector end cover 21.

In the embodiments of the present application, the current collector end cover 21 is a roughly flat structure, and the first plane 25 is a plane perpendicular to the thickness direction of the current collector end cover 21. As shown in FIG. 11, the first plane 25 is perpendicular to the second direction Y and parallel to the first direction X. The second direction Y is the same as the thickness direction of the current collector end cover 21.

The projection area of the tab connecting portion 212 on the first plane 25 is A1, and the projection area of the current collector end cover 21 on the first plane 25 is A2. The ratio a between the two satisfies a=A1/A2. The larger a is, the larger the area of the tab connecting portion 212 in the current collector end cover 21 is. Since for the tab connecting portion 212, more concern is given to the reliability of the electrical connection with the first tab 241 and the current carrying capacity, a too large a value will have a negative impact on the overall strength of the current collector end cover 21, while a too small a value will also have an adverse effect on the connection reliability and current carrying capacity with the first tab 241.

Optionally, the ratio a of the projection area of the tab connecting portion 212 on the first plane 25 to the projection area of the current collector end cover 21 on the first plane 25 may be 0.1, 0.3, 0.5, 0.7 or 0.95, etc.

In the embodiments of the present application, limiting the ratio a of the projection area of the tab connecting portion 212 on the first plane 25 to the projection area of the current collector end cover 21 on the first plane 25 within an appropriate range can better balance the connection reliability and current carrying capacity of the current collector end cover 21 and the first tab 241, as well as the overall structural strength, and improve the reliability of the current collector end cover 21.

According to some embodiments of the present application, the ratio a of the projection area of the tab connecting portion 212 on the first plane 25 to the projection area of the current collector end cover 21 on the first plane 25 satisfies: 0.4 ≤ a ≤ 0.6.

Optionally, the ratio a of the projection area of the tab connecting portion 212 on the first plane 25 to the projection area of the current collector end cover 21 on the first plane 25 can be 0.4, 0.5, or 0.6, etc.

In the embodiments of the present application, by setting the ratio a of the area of the tab connecting portion 212 to the current collector end cover 21 to be between 0.4 and 0.6, the current carrying capacity, connection reliability, and structural strength of the current collector end cover 21 are made more uniform.

According to some embodiments of the present application, the current collector end cover 21 further includes a structural reinforcement portion 2133 at one end of the case connecting portion 213 close to the case 22. Along the thickness direction of the current collector end cover 21, the maximum size d3 of the structural reinforcement portion 2133 is greater than the maximum thickness d4 of the case connecting portion 213.

In the embodiments of the present application, the structural reinforcement portion 2133 can be integrally formed with the case connecting portion 213, and can even be integrally formed with the tab connecting portion 212, and different thicknesses or structural forms can be formed through processing in a later stage. Alternatively, the structural reinforcement portion 2133 may be manufactured separately and connected to the case connecting portion 213 to obtain a complete current collector end cover 21.

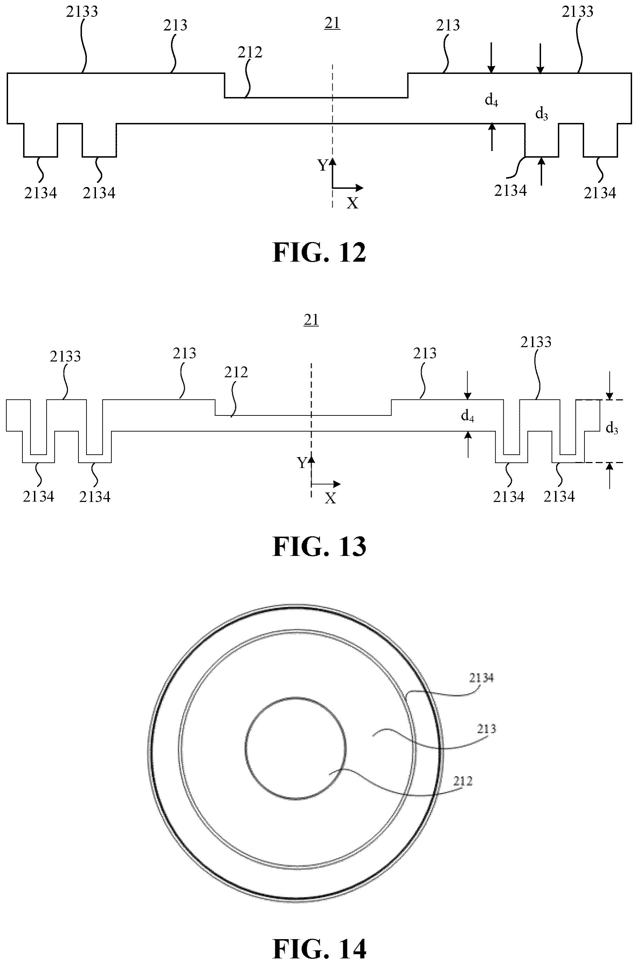

The structural reinforcement portion 2133 can be realized by thickening a local portion of the current collector end cover 21. As an example, FIG. 12 is an eighth schematic structural diagram of the current collector end cover 21 according to some embodiments of the present application. As shown in FIG. 12, a structural reinforcement portion 2133 is provided on the periphery of the case connecting portion 213 of the current collector end cover 21. Along the second direction Y which is the same as the thickness direction of the current collector end cover 21, the maximum dimension d3 of the structural reinforcement portion 2133 is greater than the maximum thickness d4 of the case connecting portion 213.

FIG. 13 a ninth schematic structural diagram of a current collector end cover 21 according to some embodiments of the present application; As shown in FIG. 13, it can be understood that the maximum dimension d3 of the structural reinforcement portion 2133 can be a dimension of a local position, which can allow the structural reinforcement portion 2133 to also have a dimension along the second direction Y that is smaller than the maximum thickness d4 of the case connecting portion 213. The structural reinforcement portion 2133 may be one or more folds punched on the plate-like structure, wherein a maximum dimension d3 along the second direction Y is greater than a maximum thickness d4 of the case connecting portion 213.

In the embodiments of the present application, by adding a structural reinforcement portion 2133 to the case connecting portion 213, the overall strength of the current collector end cover 21 can be increased, and the anti-deformation ability of the current collector end cover 21 can be improved. This is not only beneficial for installation positioning and welding positioning during connection, but also for improving the structural reliability of the battery cell 20.

According to some embodiments of the present application, the structural reinforcement portion 2133 includes at least one third protrusion 2134 protruding in a direction away from the electrode assembly 23 relative to the case connecting portion 213 or in a direction towards the electrode assembly 23 relative to the case connecting portion 213.

In the embodiments of the present application, the structural reinforcement portion 2133 can also be realized by providing a protrusion on the current collector end cover 21.

As an example, as shown in FIG. 13, the structural reinforcement portion 2133 may include a third protrusion 2134 protruding relative to the case connecting portion 213 in a direction away from the electrode assembly 23. The number of the third protrusions 2134 may be one or more, and the shape of the third protrusion 2134 may be arbitrary, which is not limited in this embodiment. In other examples, the third protrusion 2134 may also protrude in a direction towards the electrode assembly 23.

In the embodiments of the present application, the structural reinforcement portion 2133 is formed by providing a third protrusion 2134, which can simplify the structural form of the structural reinforcement portion 2133, facilitate processing and manufacturing, and reduce unnecessary weight increase while providing strength support.

According to some embodiments of the present application, the projection of the third protrusion 2134 on the first plane 25 is annular, wherein the first plane 25 is a plane perpendicular to the thickness direction of the current collector end cover 21.

In some examples, FIG. 14 is a top view of FIG. 13. As shown in FIG. 14, the current collector end cover 21 can be a circular end cover, and the third protrusions 2134 can be continuously arranged along the outer periphery of the case connecting portion 213 to form an annular reinforcement portion, which can further increase the structural strength of the current collector end cover 21.

According to some embodiments of the present application, the number of third protrusions 2134 is multiple and spaced along the first direction X, the first direction X is the direction from the center of the current collector end cover 21 to the edge of the current collector end cover 21.

In the embodiments of the present application, the interval distance between two adjacent third protrusions 2134 can be the same or different, and this embodiment is not limited here.

In the embodiments of the present application, by providing multiple third protrusions 2134 along the direction X from the center of the current collector end cover 21 to the edge of the current collector end cover 21, compared to increasing the overall thickness, it can more effectively balance the strength requirements and energy density requirements, and improve the overall performance of the battery cell 20.

According to some embodiments of the present application, as shown in FIG. 11, the ratio of the projection area A1 of the tab connecting portion 212 on the first plane 25 to the projection area A2 of the current collector end cover 21 on the first plane 25 is a. The minimum thickness of the tab connecting portion 212 along the thickness direction of the current collector end cover 21 is d0, where 0.05 ≤ d0/a ≤ 40, and the first plane 25 is a plane perpendicular to the thickness direction of the current collector end cover 21.

In the embodiments of the present application, the weld area where the tab connecting portion 212 is connected to the first tab 241 can serve as a relatively weak structural area and rupture when the internal pressure of the battery cell 20 reaches a certain preset threshold, thereby acting as an explosion-proof valve. Also, due to the influence of the manufacturing process, the thickness of the tab connecting portion 212 along the second direction Y which is the same as the thickness direction of the current collector end cover 21 varies to a certain extent.

The ratio a of the projection area A1 of the tab connecting portion 212 on the first plane 25 to the projection area A2 of the current collector end cover 21 on the first plane 25, and the minimum thickness d0 of the tab connecting portion 212 along the second direction Y which is the same as the thickness direction of the current collector end cover 21 will both affect the strength of the area where the tab connecting portion 212 is located in the battery cell 20 for opening an explosion-proof valve. Specifically, if the minimum thickness d0 of the tab connecting portion 212 along the thickness direction of the current collector end cover 21 is too large or the ratio a of the projection area A1 of the tab connecting portion 212 on the first plane 25 to the total projection area A2 of the current collector end cover 21 on the first plane 25 is too small, the strength of the explosion-proof valve will be too high, making it difficult to open the valve in time under severe conditions such as thermal runaway and excessive air pressure inside the battery cell 20, resulting in rupture of the case 22, etc. If the minimum thickness d0 of the tab connecting portion 212 along the thickness direction of the current collector end cover 21 is too small or the ratio a of the projection area A1 of the tab connecting portion 212 on the first plane 25 to the total projection area A2 of the current collector end cover 21 on the first plane 25 is too large, the strength of the explosion-proof valve will be too low. During the production and use of the battery cell 20, the explosion-proof valve may be opened uncontrollably due to other external forces, resulting in leakage of the battery cell 20, abnormal electrical connection, etc. Optionally, the value of d0/a may be 0.05, 0.1, 1, 5, 10, 20 or 40, etc.

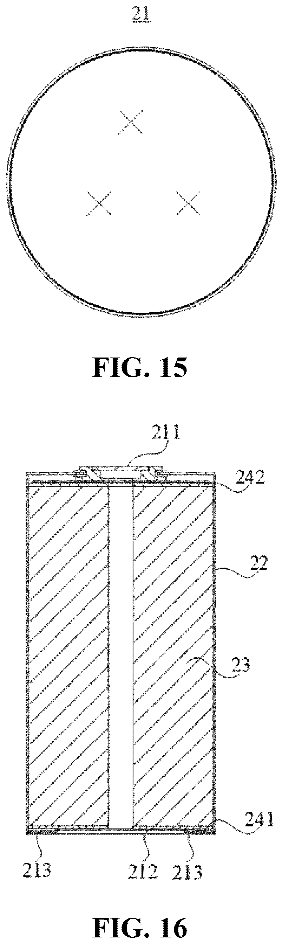

In some embodiments, the current collector end cover 21 further includes at least one pressure relief portion, which is configured to relieve pressure when the pressure in the accommodating cavity of the battery cell 20 is greater than or equal to a preset threshold. As an example, FIG. 15 is a top view of the current collector end cover according to further embodiments of the present application. As shown in FIG. 15, the pressure relief portion may be a notch, and the notch is located on at least one of the first surface of the current collector end cover 21 facing the electrode assembly 23 and the second surface facing away from the electrode assembly 23, and the thickness at the location of the notch is less than the thickness around the notch.

In the embodiments of the present application, by setting the ratio a of the projection area A1 of the tab connecting portion 212 on the first plane 25 to the projection area A2 of the current collector end cover 21 on the first plane 25, and the ratio d0 of the minimum thickness of the tab connecting portion 212 along the thickness direction of the current collector end cover 21 to be between 0.05 and 40, the area where the tab connecting portion 212 is located can be used as an explosion-proof valve with appropriate valve opening strength, thereby achieving more stable and reliable valve opening and pressure relief, and improving the reliability of the battery cell 20.

According to some embodiments of the present application, the value of d0/a satisfies: 0.8 ≤ d0/a ≤ 1.6.

Optionally, the value of d0/a may be 0.8, 1.0, 1.2, 1.5 or 1.6, etc.

In the embodiments of the present application, by setting the ratio a of the projection area A1 of the tab connecting portion 212 on the first plane 25 to the projection area A2 of the current collector end cover 21 on the first plane 25, and the ratio d0 of the minimum thickness of the tab connecting portion 212 along the thickness direction of the current collector end cover 21 to be between 0.8 and 1.6, the strength of the explosion-proof valve opening of the battery cell 20 can be more appropriately adjusted, thereby improving the reliability of the battery cell 20.

According to some embodiments of the present application, FIG. 16 is a schematic structural diagram of another battery cell according to some embodiments of the present application. As shown in FIG. 16, the case 22 includes an end wall away from the opening, and the end wall is provided with a second through hole. The electrode assembly 23 also includes a second tab 242 close to the end wall, and the polarity of the second tab 242 is different from the polarity of the first tab 241. The battery cell 20 also includes an electrode terminal 211, and the electrode terminal 211 passes through the second through hole and electrically connected to the second tab 242.

In the embodiments of the present application, the electrode terminal 211 is an output component for outputting the electric energy of the battery cell 20, such as an terminal post, and the number of the electrode terminal 211 can be one. As an example, the first tab 241 is a negative tab, and the second tab 242 is a positive tab.

In the embodiments of the present application, the electrode terminal 211 is inserted into the second through hole and electrically connected to the second tab 242. The current collector end cover 21 is electrically connected to the first tab 241, and by the current collector end cover 21, it realizes the integrated design of the current collector plate and the end cover, which can achieve reliable electrical connection between the current collector plate and the end cover before battery assembly, reduce the risk of false welding during battery cell assembly, and thus improve the reliability of the battery cell 20.

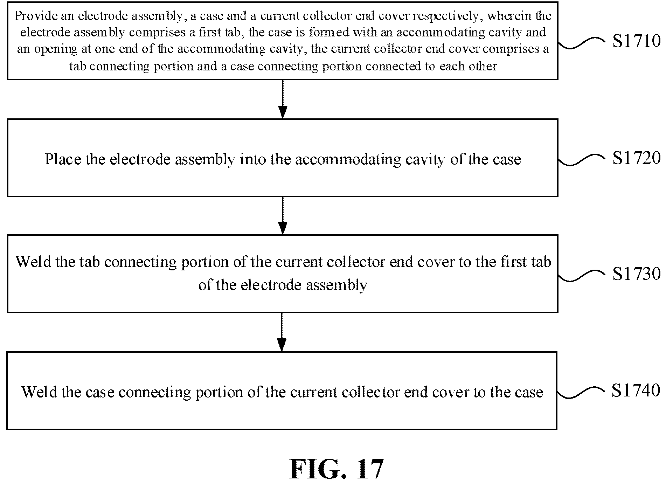

FIG. 17 is a flowchart of a method for manufacturing a battery cell according to some embodiments of the present application. As shown in FIG. 17, a method for manufacturing a battery cell, including:
Step S1710: providing an electrode assembly, a case and a current collector end cover respectively, wherein the electrode assembly includes a first tab, the case is formed with an accommodating cavity and an opening at one end of the accommodating cavity, the current collector end cover includes a tab connecting portion and a case connecting portion connected to each other.
Step S1720: placing the electrode assembly into the accommodating cavity of the case.
Step S1730: welding the tab connecting portion of the current collector end cover to the first tab of the electrode assembly.
Step S1740: welding the case connecting portion of the current collector end cover to the case.

In the embodiments of the present application, the battery cell may include a lithium-ion secondary battery, a lithium-ion primary battery, a lithium-sulfur battery, a sodium/lithium-ion battery, a sodium-ion battery, a magnesium-ion battery, or the like, which is not limited in the embodiments of the present application. The battery cell may be in a cylindrical shape, a flat shape, a cuboid shape or another shape, which is not limited in the embodiments of the present application either.

The electrode assembly is a component of a battery cell where an electrochemical reaction occurs. The accommodating cavity formed by the case may contain one or more electrode assemblies. The end cover refers to a component that covers the opening of the case to isolate the accommodating cavity for the battery cell from the external environment. Without limitation, the shape of the end cover can be adapted to the shape of the case to fit the case.

In the embodiments of the present application, the current collector end cover includes a tab connecting portion and a case connecting portion connected to each other. The tab connecting portion is connected to the first tab, and its function is equivalent to a current collector plate. The case connecting portion is located on the side of the tab connecting portion close to the case and is connected to the case, so that the current collector end cover acts as an end cover to close the opening of the case. That is, the current collector end cover combines the functions of the current collector plate and the end cover, and the current collector end cover is an integrated structure of the current collector plate and the end cover. The tab connecting portion and the case connecting portion can be integrally formed or separately manufactured and then fixed together.

In an embodiment of the present application, the electrode assembly is placed in the accommodating cavity of the case, and for the current collector end cover, the tab connecting portion can first be welded to the first tab, and then the case connecting portion is welded to the case, such as by laser welding or friction welding.

In the embodiments of the present application, in the assembly process of the battery cell, the current collector end cover is used as a separate incoming part to achieve reliable connection between the tab connecting portion and the case connecting portion before welding with the first tab and the case. This can simplify the welding process during battery cell assembly, reduce the risk of false welding, and improve the reliability of the battery cell.

According to some embodiments of the present application, the aforementioned step S1730 includes: arranging the current collector end cover at the opening of the case, so that the tab connecting portion abuts against the first tab; emitting a laser from a side of the current collector end cover away from the electrode assembly to penetrate the tab connecting portion to weld the tab connecting portion to the first tab.

In the embodiments of the present application, since the electrode assembly is located within the accommodating cavity inside the case, the corresponding first tab is also located inside the case. When the current collector end cover is arranged at the opening of the case, the tab connecting portion can abut against the first tab, and laser welding can be used to achieve the welding connection between the tab connecting portion and the first tab. Specifically, the tab connecting portion and the first tab are heated by laser radiation, and the surface heat diffuses to the inside through heat conduction. By controlling laser parameters such as laser pulse width, energy, peak power and repetition frequency, the laser penetrates the tab connecting portion and melts the first tab, thereby welding the tab connecting portion to the first tab.

In this embodiment of the present application, the current collector end cover is arranged at the opening of the case, so that the tab connecting portion abuts against the first tab, and the laser is emitted from the side of the current collector end cover away from the electrode assembly and penetrates the tab connecting portion to weld the tab connecting portion to the first tab, further simplifying the welding process of the battery cell.

An embodiment of the present application provides a battery 100. The battery 100 includes the battery cell 20 in above embodiment.

By adopting the battery cell 20 in the embodiment of the present application, the probability of false welding between the current collector plate and the end cover caused by penetration welding can be reduced, thereby improving the safety and reliability of the battery cell 20.

Embodiments of the present application further provide an electrical apparatus including the battery 100 according to the aforementioned embodiments, the battery 100 being configured to supply electrical energy to the electrical apparatus.

The technical solution of the present application is further described below by means of a specific embodiment, as shown in Figs. 1 to 15.

The battery cell 20 includes an electrode assembly 23, a case 22, and a current collector end cover 21. The electrode assembly 23 includes a first tab 241. The case 22 is formed with an accommodating cavity for accommodating the electrode assembly 23 and an opening at one end of the accommodating cavity. The current collector end cover 21 is connected to the case 22 to close the opening. The current collector end cover 21 includes a tab connecting portion 212 and a case connecting portion 213 connected to each other. The tab connecting portion 212 is connected to the first tab 241, and the case connecting portion 213 is connected to the case 22. The tab connecting portion 212 is welded to the first tab 241 to form a welding area Q. The welding area Q is projected on the current collector end cover 21 and offset from the case connecting portion 213.

The case 22 includes an end wall away from the opening, which is provided with a second through hole. The electrode assembly 23 also includes a second tab 242 close to the end wall, the polarity of the second tab 242 is different from the polarity of the first tab 241. The battery cell 20 also includes an electrode terminal 211 passing through the second through hole and electrically connected to the second tab 242.

The fracture elongation of the tab connecting portion 212 is smaller than the fracture elongation of the case connecting portion 213, the ratio S of the fracture elongation of the case connecting portion 213 to the fracture elongation of the tab connecting portion 212 satisfies 1.1 ≤ S ≤ 2.2, the fracture elongation S₁ of the tab connecting portion 212 satisfies 0.2 ≤ S₁ ≤ 0.3, and the fracture elongation S₂ of the case connecting portion 213 satisfies 0.35 ≤ S₂ ≤ 0.45.

The tab connecting portion 212 includes a first main body 2121 and a first connecting portion 2122 connected to the first main body 2121 and arranged along the outer edge of the first main body 2121. The case connecting portion 213 includes a second connecting portion 2131 and a first through hole. An orthographic projection of the first main body 2121 on the case connecting portion 213 is located within the first through hole, and the first connecting portion 2122 is welded to the second connecting portion 2131.

In some embodiments, the first connecting portion 2122 includes a first protrusion extending in a direction away from or towards the electrode assembly 23, along a first direction X, the first protrusion abuts against the second connecting portion 2131, and the first direction X is a direction from the center of the current collector end cover 21 to the edge of the current collector end cover 21.

In some embodiments, the first connecting portion 2131 includes a first protrusion extending in a direction away from or towards the electrode assembly 23, along a first direction X, the first protrusion abuts against the second connecting portion 2122, and the first direction X is a direction from the center of the current collector end cover 21 to the edge of the current collector end cover 21.

In some embodiments, the first connecting portion 2122 includes a first protrusion extending in a direction away from the electrode assembly 23, and the second connecting portion 2131 includes a second protrusion extending in a direction towards the electrode assembly 23. Along the first direction X, the first protrusion abuts against the second protrusion, and the first direction X is the direction from the center of the current collector end cover 21 to the edge of the current collector end cover 21. Alternatively, the first connecting portion 2122 may include a second protrusion extending in a direction towards the electrode assembly 23, with the first protrusion abutting against the second protrusion along the first direction X. The first direction X is the direction from the center of the current collector end cover 21 to the edge of the current collector end cover 21.

In some embodiments, the tab connecting portion 212 is in a shape of a flat plate, and the orthographic projection of the first connecting portion 2122 on the case connecting portion 213 at least partially overlaps with the second connecting portion 2131. The side of the tab connecting portion 212 facing the electrode assembly 23 is flush with the surface of the side of the case connecting portion 213 facing the electrode assembly 23.

The base metals of the tab connecting portion 212 and the case connecting portion 213 are different. For example, the base metal of the tab connecting portion 212 is copper, and the base metal of the case connecting portion 213 is iron or aluminum; or the base metals of the tab connecting portion 212 and the case connecting portion 213 are the same, for example, the base metals of the tab connecting portion 212 and the case connecting portion 213 are copper.

The maximum thickness of the tab connecting portion 212 is d₁, and the minimum thickness of the case connecting portion 213 is d₂, and d₁ ≤ d₂, 0.5 ≤ d₁/d₂ ≤ 1 are satisfied.

The ratio of the projection area of the tab connecting portion 212 on the first plane 25 to the projection area of the current collector end cover 21 on the first plane 25 asatisfies: 0.4 ≤ a ≤ 0.6, where the first plane 25 is a plane perpendicular to the thickness direction of the current collector end cover 21.

The current collector end cover 21 also includes a structural reinforcement portion 2133 at one end of the case connecting portion 213 close to the case 22. Along the thickness direction of the current collector end cover 21, the maximum size d₃ of the structural reinforcement portion 2133 is greater than the maximum thickness d₄ of the case connecting portion 213. The structural reinforcement portion 2133 includes at least one third protrusion 2134 protruding in a direction away from the electrode assembly 23 relative to the case connecting portion 213 or in a direction towards the electrode assembly 23 relative to the case connecting portion 213. The projection of the third protrusion 2134 on the first plane 25 is annular. The number of third protrusions 2134 is multiple and the third protrusions 2134 are spaced along the first direction X, the first direction X is the direction from the center of the current collector end cover 21 to the edge of the current collector end cover 21.

The ratio of the projection area of the tab connecting portion 212 on the first plane 25 to the projection area of the current collector end cover 21 on the first plane 25 is a. The minimum thickness of the tab connecting portion 212 along the thickness direction of the current collector end cover 21 is d₀, where 0.05 ≤ d₀/a ≤ 40. The first plane 25 is a plane perpendicular to the thickness direction of the current collector end cover 21. The value of d₀/a satisfies: 0.8 ≤ d₀/a ≤ 1.6.

It should be finally noted that: The foregoing embodiments are merely intended to describe the technical solutions of the present application, but not for limiting the present application. Although the present application is described in detail with reference to the foregoing embodiments, persons of ordinary skill in the art should understand that they may still make modifications to the technical solutions described in the foregoing embodiments or make equivalent replacements to part or all technical features thereof. These modifications or replacements do not make the essence of the corresponding technical solutions depart from the scopes of the technical solutions of the various embodiments of the present application, and shall fall within the scopes of the claims and the specification of the present application. In particular, the technical features mentioned in the various embodiments can be combined in any manner as long as there is no structural conflict. The present application is not limited to the specific embodiments disclosed herein, but includes all technical solutions falling within the scope of the claims.

## Claims

1. A battery cell, comprising:
an electrode assembly comprising a first tab;
a case formed with an accommodating cavity for accommodating the electrode assembly and an opening at one end of the accommodating cavity; and
a current collector end cover connected to the case to close the opening, the current collector end cover comprising a tab connecting portion and a case connecting portion connected to each other, wherein the tab connecting portion is connected to the first tab, and the case connecting portion is connected to the case.

2. The battery cell of claim 1, wherein the tab connecting portion is welded to the first tab to form a welding area, and a projection of the welding area on the current collector end cover is offset from the case connecting portion.

3. The battery cell of claim 1 or 2, wherein
a fracture elongation of the tab connecting portion is smaller than a fracture elongation of the case connecting portion.

4. The battery cell of any one of claims 1 to 3, wherein
a ratio S of the fracture elongation of the case connecting portion to the fracture elongation of the tab connecting portion satisfies 1.1 ≤ S ≤ 2.2.

5. The battery cell of any one of claims 1 to 4, wherein
the fracture elongation S₁ of the tab connecting portion satisfies 0.2 ≤ S₁ ≤ 0.3, and the fracture elongation S₂ of the case connecting portion satisfies 0.35 ≤ S₂ ≤ 0.45.

6. The battery cell of any one of claims 1 to 5, wherein
the tab connecting portion comprises a first main body and a first connecting portion connected to the first main body and arranged along an outer edge of the first main body;
the case connecting portion comprises a second connecting portion and a first through hole, an orthographic projection of the first main body on the case connecting portion is located within the first through hole, and the first connecting portion is welded to the second connecting portion.

7. The battery cell of claim 6, wherein the first connecting portion comprises a first protrusion extending in a direction away from or towards the electrode assembly, along a first direction, the first protrusion abuts against the second connecting portion, and the first direction is a direction from a center of the current collector end cover to an edge of the current collector end cover.

8. The battery cell of claim 6, wherein the second connecting portion comprises a second protrusion extending in a direction away from or towards the electrode assembly, along a first direction, the second protrusion abuts against the first connecting portion, and the first direction is a direction from a center of the current collector end cover to an edge of the current collector end cover.

9. The battery cell of claim 6, wherein
the first connecting portion comprises a first protrusion extending in a direction away from the electrode assembly, and the second connecting portion comprises a second protrusion extending in a direction towards the electrode assembly, along a first direction, the first protrusion abuts against the second protrusion, and the first direction is a direction from a center of the current collector end cover to an edge of the current collector end cover; or, the first connecting portion comprises a second protrusion extending in a direction towards the electrode assembly, along a first direction X, the first protrusion abuts against the second protrusion, the first direction is a direction from a center of the current collector end cover to an edge of the current collector end cover.

10. The battery cell of claim 6, wherein
the tab connecting portion is in a shape of a flat plate, and an orthographic projection of the first connecting portion on the case connecting portion at least partially overlaps with the second connecting portion.

11. The battery cell of claim 6, wherein
a side of the tab connecting portion facing the electrode assembly is flush with a surface of a side of the case connecting portion facing the electrode assembly.

12. The battery cell of any one of claims 1 to 11, wherein
a base metal of the tab connecting portion is different from a base metal of the case connecting portion.

13. The battery cell of claim 12, wherein
the base metal of the tab connecting portion is copper; the base metal of the case connecting portion is iron or aluminum.

14. The battery cell of any one of claims 1 to 11, wherein a base metal of the tab connecting portion is the same as a base metal of the case connecting portion.

15. The battery cell of claim 14, wherein
the base metal of the tab connecting portion and the base metal of the case connecting portion are copper.

16. The battery cell of any one of claims 1 to 15, wherein
a maximum thickness of the tab connecting portion is d₁, a minimum thickness of the case connecting portion is d₂, and d₁ ≤ d₂ is satisfied.

17. The battery cell of claim 16, wherein the maximum thickness of the tab connecting portion is d₁, the minimum thickness of the case connecting portion is d₂, and 0.5 ≤ d₁/d₂ ≤ 1 is satisfied.

18. The battery cell of any one of claims 1 to 17, wherein
a ratio a of a projection area of the tab connecting portion on a first plane to a projection area of the current collector end cover on the first plane satisfies: 0.1 ≤ a ≤ 0.95, wherein the first plane is a plane perpendicular to a thickness direction of the current collector end cover.

19. The battery cell of claim 18, wherein
the ratio a of the projection area of the tab connecting portion on the first plane to the projection area of the current collector end cover on the first plane satisfies: 0.4 ≤ a ≤ 0.6.

20. The battery cell of any one of claims 1 to 19, wherein
the current collector end cover further comprises a structural reinforcement portion at one end of the case connecting portion close to the case, along the thickness direction of the current collector end cover, a maximum size of the structural reinforcement portion is greater than a maximum thickness of the case connecting portion.

21. The battery cell of claim 20, wherein
the structural reinforcement portion comprises at least one third protrusion protruding in a direction away from the electrode assembly relative to the case connecting portion or in a direction towards the electrode assembly relative to the case connecting portion.

22. The battery cell of claim 21, wherein
a projection of the third protrusion on the first plane is annular, wherein the first plane is a plane perpendicular to the thickness direction of the current collector end cover.

23. The battery cell of claim 21 or 22, wherein
a number of the third protrusions is multiple, and the third protrusions are spaced along a first direction, the first direction is a direction from a center of the current collector end cover to an edge of the current collector end cover.

24. The battery cell of any one of claims 1 to 23, wherein
a ratio of a projection area of the tab connecting portion on a first plane to a projection area of the current collector end cover on the first plane is a, a minimum thickness of the tab connecting portion along a thickness direction of the current collector end cover is d₀, where 0.05 ≤ d₀/a ≤ 40, wherein the first plane is a plane perpendicular to the thickness direction of the current collector end cover.

25. The battery cell of claim 24, wherein
The value of d₀/a satisfies: 0.8 ≤ d₀/a ≤ 1.6.

26. The battery cell of any one of claims 1 to 25, wherein
the case comprises an end wall away from the opening, and the end wall is provided with a second through hole,
the electrode assembly further comprises a second tab close to the end wall, and a polarity of the second tab is different from a polarity of the first tab,
the battery cell further comprises an electrode terminal passing through the second through hole and electrically connected to the second tab.

27. A method for manufacturing a battery cell, comprising:
providing an electrode assembly, a case and a current collector end cover respectively, wherein the electrode assembly comprises a first tab, the case is formed with an accommodating cavity and an opening at one end of the accommodating cavity, the current collector end cover comprises a tab connecting portion and a case connecting portion connected to each other;
placing the electrode assembly into the accommodating cavity of the case;
welding the tab connecting portion of the current collector end cover to the first tab of the electrode assembly;
welding the case connecting portion of the current collector end cover to the case.

28. The method of claim 27, wherein the welding the tab connecting portion of the current collector end cover to the first tab of the electrode assembly comprises:
arranging the current collector end cover at the opening of the case, so that the tab connecting portion abuts against the first tab;
emitting a laser from a side of the current collector end cover away from the electrode assembly to penetrate the tab connecting portion to weld the tab connecting portion to the first tab.

29. A battery comprising the battery cell of any one of claims 1 to 26.

30. An electrical apparatus, the electrical apparatus comprising a battery of claim 29, the battery being used to provide electrical energy.
